# EUROPÄISCHE PATENTSCHRIFT

(11) **EP 2 220 588 B1**
(45) Veröffentlichungstag und Bekanntmachung des Hinweises auf die Patenterteilung: **25.03.2020**
(21) Anmeldenummer: 08857464.5
(22) Anmeldetag: 13.10.2008
(51) Int. Cl.: G06K 9/00

(54) **KONFIGURATIONSMODUL FÜR EIN ÜBERWACHUNGSSYSTEM, ÜBERWACHUNGSSYSTEM, VERFAHREN ZUR KONFIGURATION DES ÜBERWACHUNGSSYSTEMS SOWIE COMPUTERPROGRAMM**
CONFIGURATION MODULE FOR A SURVEILLANCE SYSTEM, SURVEILLANCE SYSTEM, METHOD FOR CONFIGURING THE SURVEILLANCE SYSTEM, AND COMPUTER PROGRAM
MODULE DE CONFIGURATION POUR UN SYSTÈME DE SURVEILLANCE, SYSTÈME DE SURVEILLANCE, PROCÉDÉ DE CONFIGURATION DUDIT SYSTÈME DE SURVEILLANCE ET PROGRAMME INFORMATIQUE

(30) Priorität: 07.12.2007 DE 102007058959
(43) Veröffentlichungstag der Anmeldung: 25.08.2010
(73) Patentinhaber: Robert Bosch GmbH, 70442 Stuttgart (DE)
(72) Erfinder: BUSCH, Hans-Juergen, 91186 Buechenbach (DE)
(86) Internationale Anmeldenummer: PCT/EP2008/063731
(87) Internationale Veröffentlichungsnummer: WO 2009/071367

(56) Entgegenhaltungen:
- WO-A1-01/69932
- DE-A1- 10 252 731
- US-A1- 2001 008 561
- KRUEGLE H: "CCTV surveillance : analog and digital video practices and technology. Passage from chapter 13: Video Motion Detectors" CCTV SURVEILLANCE : ANALOG AND DIGITAL VIDEO PRACTICES AND TECHNOLOGY (2ND ED.), ELSEVIER BUTTERWORTH HEINEMANN, 1. Januar 2007 (2007-01-01), Seiten 353-371, XP002523941 ISBN: 978-0-7506-7768-4
- ROBERT T COLLINS ET AL: "Algorithms for Cooperative Multisensor Surveillance" PROCEEDINGS OF THE IEEE, IEEE. NEW YORK, US, Bd. 89, Nr. 10, 1. Oktober 2001 (2001-10-01), XP011044562 ISSN: 0018-9219
- AGBINYA J I ET AL: "Multi-Object Tracking in Video", REAL-TIME IMAG, ACADEMIC PRESS LIMITED, GB, vol. 5, no. 5, 1 October 1999 (1999-10-01) , pages 295-304, XP004419538, ISSN: 1077-2014, DOI: 10.1006/RTIM.1998.0174

## Beschreibung

### Stand der Technik

Die Erfindung betrifft ein Konfigurationsmodul für ein Überwachungssystem, wobei das Überwachungssystem ausgebildet ist, Objekte mit Objekteigenschaften in einer Überwachungsszene auf Basis von Objekteigenschaftsbereichen als Überwachungsobjekte zu klassifizieren und wobei das Konfigurationsmodul zur Definition der Objekteigenschaftsbereiche ausgebildet ist. Die Erfindung betrifft weiterhin ein Überwachungssystem mit dem Konfigurationsmodul, ein Verfahren zur Konfiguration und ein Computerprogramm.

Überwachungssysteme, beispielsweise Videoüberwachungssysteme, dienen zur Beobachtung von einem oder mehreren Überwachungsbereichen, wobei auf den oder die Überwachungsbereiche Überwachungskameras gerichtet sind. Die von den Überwachungskameras aufgenommenen Videobilder werden oftmals an eine zentrale Einheit, zum Beispiel an eine Überwachungszentrale, weitergegeben und dort durch Überwachungspersonal oder automatisiert ausgewertet. Da derartige Videoüberwachungssysteme häufig eine Vielzahl, z.B. 100 bis 1000 Überwachungskameras aufweisen, kann die Vielzahl der Videobilder von einer begrenzten Anzahl von Wachleuten nicht sinnvoll überwacht werden, so dass die automatisierte Bildauswertung zunehmend an Bedeutung gewinnt.

Die Druckschrift DE 102 52 731 A1 offenbart ein Verfahren zur Überwachung einer Szene mit wenigstens einem bildgebenden Sensor. Das Verfahren zeichnet sich dadurch aus, dass nur eine Auswahl der mit dem bildgebenden Sensor aufgenommenen Daten als relevante Daten abspeichert werden, um den nachträglichen Auswerteaufwand und den Speicherbedarf zu reduzieren. Die Auswahl wird dadurch erreicht, dass an einem Objekt in der aufgenommenen Überwachungsszene anhand von Objektmerkmalen Veränderungen erkannt werden, die außerhalb eines vorgegebenen Rahmens liegen. Dieser Rahmen wird durch einen vorgegebenen Unterschied zu einem vorgegebenen Wert für ein jeweiliges Objektmerkmal bestimmt. Als Objektmerkmale sind beispielsweise Grauwert, Textur, Position, Bewegung und Kontur des Objekts in dieser Druckschrift angegeben.

In der Veröffentlichung "Multi-Object Tracking in Video" von Agbinya et al. (Academic press limited, GB, Bd. 5 Nr. 5, 1. Oktober 1999, Seiten 295-304, XP004419538, ISSN 1077-2014, DOI: 10.1006/RTIM.1998.0174) ist ein Verfahren zum Tracken eines Objekts in Videodaten beschrieben. Das zu trackende Objekt kann von einem Benutzer durch Anklicken optisch ausgewählt werden, wobei diese Objekt dann in den folgenden Bildern, basierend auf objektcharakteristischen Daten, verfolgt wird.

Die Durchschrift US 2001/ 0008561 A1 beschreibt beispielsweise ein real-time Anzeigesystem zur Verfolgung einer ausgewählten Person in Bilddaten.

Die Druckschrift WO 01/69932 A1 offenbart ein System zur Datenreduktion in Videobildern. Das System nutzt eine Objektverfolgung zur Reduktion der Informationen in einem Bilderstrom, der von einer Videokamera bereitgestellt wird. Dabei werden sich bewegende Objekte detektiert und falls von Interesse ausgewählt. Dies erfolgt durch vergleich des detektierten Objektes mit voreingestellten Charakteristika oder durch manuelle Auswahl. Wenn ein Bild des Bildstroms kein ausgewähltes Objekt umfasst wird es als leeres Bild markiert.

### Offenbarung der Erfindung

Im Rahmen der Erfindung wird ein Konfigurationsmodul mit den Merkmalen des Anspruchs 1, ein Überwachungssystem mit den Merkmalen des Anspruchs 7, ein Verfahren zur Konfiguration eines oder des Überwachungssystems mit den Merkmalen des Anspruchs 8 sowie ein Computerprogramm mit den Merkmalen des Anspruchs 9 offenbart. Vorteilhafte oder bevorzugte Ausführungsformen der Erfindung ergeben sich aus den Unteransprüchen, der nachfolgenden Beschreibung sowie den beigefügten Figuren.

Das erfindungsgemäße Konfigurationsmodul ist für ein Überwachungssystem ausgebildet und/oder geeignet, wobei das Überwachungssystem als ein optisches Überwachungssystem, nämlich als ein Videoüberwachungssystem, und optional ein auf andere Sensoren, zum Beispiel Bewegungsmelder, Mikrophone, IR-Kameras etc., gestütztes Überwachungssystem ausgebildet ist.

Das Überwachungssystem ist so realisiert, dass es Objekte in einer Überwachungsszene anhand deren Objekteigenschaften durch Vergleich mit Objekteigenschaftsbereichen, also z.B. Objekteigenschaften mit Toleranzen oder mehrere diskrete Objekteigenschaften, als Überwachungsobjekte klassifizieren bzw. verwerfen kann. Insbesondere wird geprüft, ob eine Objekteigenschaft sich innerhalb eines Objekteigenschaftsbereichs befindet bzw. eine Teilmenge davon bildet. Die Überwachungsobjekte bilden somit eine Auswahl aus den Objekten in der Überwachungsszene. Die Objekte können beliebig ausgebildet sein, zum Beispiel als Passanten, Tiere, Verkehrsobjekte, Autos, Lastwagen, Flugzeuge, Hubschrauber, Boote etc. Die Objekteigenschaften dienen zur Klassifizierung der Objekte und können ebenso beliebig ausgebildet sein, bevorzugte Beispiele werden später noch erläutert.

Die Überwachungsszene ist die von dem Überwachungssystem durchgeführte Abbildung eines realen Überwachungsbereichs in das Überwachungssystem zum Zwecke der Überwachung, nämlich ist die Überwachungsszene als ein Videobild oder ein Videoteilbild realisiert. Das Konfigurationsmodul ist zur Definition, insbesondere der Vor- und/oder Eingabe, der Objekteigenschaftsbereiche ausgebildet.

Erfindungsgemäß wird vorgeschlagen, dass das Konfigurationsmodul eine Auswahleinrichtung aufweist, welche eine Auswahl eines Objekts über eine Benutzerinteraktion ermöglicht. Die Auswahl kann optional auch nur auf eine Bestätigung eines Auswahlvorschlags des Konfigurationsmoduls beschränkt sein. Durch die Auswahl wird das Objekt als Referenzobjekt markiert. Das Konfigurationsmodul und/oder die Auswahleinrichtung ist programmtechnisch und/oder schaltungstechnisch ausgebildet, ausgehend von und/oder unter Verwendung der Objekteigenschaften des Referenzobjektes die Objekteigenschaftsbereiche zu definieren. Die Objekteigenschaften des Referenzobjektes bilden somit einen Startpunkt oder eine Basis zur Definition der Objekteigenschaftsbereiche.

Eine Überlegung der Erfindung ist es, die Konfiguration des Überwachungssystems, insbesondere eines Objekt-Detektors in dem Überwachungssystem, zu vereinfachen. Anstelle z.B. einer numerischen Werteeingabe oder dergleichen der Objekteigenschaftsbereiche wählt der Benutzer nur noch ein dem späteren Überwachungsobjekten ähnliches Objekt beispielsweise auf einem Videobild aus und übernimmt dessen Objekteigenschaften als Grundlage für die Objekteigenschaftsbereiche. Die Erfindung setzt somit eine muster- oder referenzobjektbasierte Konfiguration des Überwachungssystems, insbesondere des Objektdetektors um. Optional werden die Objekteigenschaften um Toleranzbereiche oder Variationen zur Bildung der Objekteigenschaftsbereiche ergänzt. Diese Ergänzung kann zum einen automatisch durch das Konfigurationsmodul oder interaktiv durch den Benutzer erfolgen.

Gemäss der Erfindung umfasst die Auswahleinrichtung eine Darstelleinrichtung, auf der die Überwachungsszene mit den Objekten darstellbar ist bzw. dargestellt wird. Die Auswahl des Objekts, welches als Referenzobjekt markiert werden soll, erfolgt z.B. mittels einer Mensch-Maschinen-Schnittstelle, wie zum Beispiel einer Maus, einem Touch-Pad oder dergleichen.

Es liegt auch im Rahmen der Erfindung, wenn mehrere Objekte als Referenzobjekte ausgewählt werden und deren Objekteigenschaften beispielsweise gemittelt oder in anderer Weise zusammengefasst werden, um eine Basis für die Objekteigenschaftsbereiche zu bilden. So ist es beispielsweise auch möglich, dass eine Vielzahl von Objekten als Referenzobjekte markiert werden und die Toleranzen bzw. Variationen der Objekteigenschaften bei der Bildung der Objekteigenschaftsbereiche auf Basis von statistischen Methoden ermittelt oder vorgeschlagen werden.

Bei einer bevorzugten Ausführungsform der Erfindung sind die wählbaren Objekte in der Darstelleinrichtung markiert dargestellt. So ist es beispielsweise denkbar, dass im Videobild erkannte Objekte automatisch mit einem Rahmen versehen werden. Diese Ausführungsform erleichtert dem Benutzer die interaktive Auswahl.

Erfindungsgemäss weist das Konfigurationsmodul eine Eingabeeinrichtung auf, welche zur Einstellung der Objekteigenschaftsbereiche ausgebildet ist. Neben einer direkten Übernahme der Objekteigenschaftsbereiche von einem oder mehreren Referenzobjekten wird somit vorgeschlagen, eine zusätzliche Eingabemöglichkeit vorzusehen, mit der der Benutzer die Objekteigenschaftsbereiche interaktiv verändern und/oder definieren kann.

Erfindungsgemäss ist die Eingabeeinrichtung zur Definition von Toleranzen der Objekteigenschaften ausgebildet, wobei die Objekteigenschaften zusammen mit den Toleranzen die Objekteigenschaftsbereiche definieren. Die Toleranzen können für den Benutzer in einfacher Weise beschrieben werden, wie zum Beispiel "0...100" oder "exakt ...großzügig" oder "klein...groß" oder dergleichen. Auf diese Weise kann der Benutzer die Toleranzen unabhängig von abstrakten Wertangaben in einfacher Weise in das Konfigurationsmodul eingeben.

Es ist weiterhin bevorzugt, wenn dem Benutzer nur die Möglichkeit zur Eingabe eines einzigen Toleranzwertes pro Objekteigenschaft bereitgestellt wird. Die Erfahrung hat gezeigt, dass bei der Verwendung von mehr Einstellmöglichkeiten zwar prinzipiell die Einstellgenauigkeit der Objekteigenschaftsbereiche verbessert ist, die Einstellqualität aufgrund von Fehleinstellungen verschlechtert wird. Zumindest in einem Modus einer "einfachen Einstellung" ist die Möglichkeit auf einen Toleranzwert/Objekteigenschaft beschränkt.

Erfindungsgemäss ist die Einstellmöglichkeit des oder der Toleranzwerte als eine grafische Einstellmöglichkeit, wie zum Beispiel ein Schieberegler, ein Drehregler oder dergleichen veranschaulicht. Auch diese Ausgestaltung unterstützt den Benutzer bei einer vereinfachten Einstellung der Objekteigenschaftsbereiche.

Wie bereits eingangs erwähnt, können die Objekteigenschaften sich auf jede klassifizierbare Eigenschaft des Objekts beziehen. Bevorzugte Objekteigenschaften betreffen die Position bzw. Bewegung, also die Auswertung der Orts-, Geschwindigkeits-, und/oder Beschleunigungsvektoren der Objekte, um Objekteigenschaftsbereiche hinsichtlich der Position, der Bewegung, Beschleunigung und/oder Bewegungsrichtung festzulegen. Eine ergänzende Möglichkeit ist die Festlegung des Abstands zu einem weiteren Punkt oder zu einem anderen bewegten oder unbewegten Objekt in der Überwachungsszene.

Weitere Objekteigenschaften betreffen Objektmerkmale, wie zum Beispiel die Größe, das Größenverhältnis zwischen Breite und Höhe des Objekts, insbesondere in der gezeigten Perspektive, und/oder die Fläche des Objekts. Durch diese Objekteigenschaften können zum Beispiel Passanten und Fahrzeuge unterschieden werden.

Nochmals weitere Objekteigenschaften betreffen Oberflächeneigenschaften des Objekts, insbesondere die Farbe und/oder den Grauwert und/oder die Textur des Objekts. Insbesondere bei komplexen Objekteigenschaften, wie zum Beispiel die Textur oder dem Farbwert, dessen Objekteigenschaftsbereiche nur schwer über einen einzigen numerischen Wert einstellbar sind, ist in dem Konfigurationsmodul ein Algorithmus oder ein Regelwerk nachgeschaltet, der den eingestellten Toleranzwert in einen ein- oder mehrdimensionalen Objekteigenschaftsbereich umsetzt.

Ein weiterer Gegenstand der Erfindung betrifft ein Überwachungssystem: mit einem Konfigurationsmodul wie in Anspruch 7 definiert. Das Überwachungssystem ist zur signaltechnischen Verknüpfung mit einer Mehrzahl von Überwachungssensoren ausgebildet, wobei die Überwachungssensoren als bildgebende Sensoren, insbesondere Videokameras, Bewegungsmelder, Mikrophone, etc. ausgebildet sein können.

Ein weiterer Gegenstand der Erfindung betrifft ein Verfahren zur Konfiguration eines Überwachungssystems wie in Anspruch 8 definiert. Das Verfahren wird bevorzugt bei der Initialisierung, also vor der Aktivierung des Überwachungsbetriebs des Überwachungssystems durchgeführt.

Ein letzter Gegenstand der Erfindung betrifft ein Computerprogramm mit den Merkmalen des Anspruchs 9.

### Kurze Beschreibung der Zeichnungen

Weitere Merkmale, Vorteile und Wirkungen der Erfindung ergeben sich aus der nachfolgenden Beschreibung eines bevorzugten Ausfühzungsbeispiels der Erfindung sowie den beigefügten Figuren. Dabei zeigen:
- Figur 1: ein schematisches Blockdiagramm eines Überwachungssystems als ein Ausfiihrungsbeispiel der Erfindung;
- Figur 2: ein Flussdiagramm als ein Ausführungsbeispiel für das erfindungsgemäße Verfahren;
- Figur 3: eine schematisierte Bildschirmansicht zur Illustration der Ausführungsbeispiele.

### Ausführungsform(en) der Erfindung

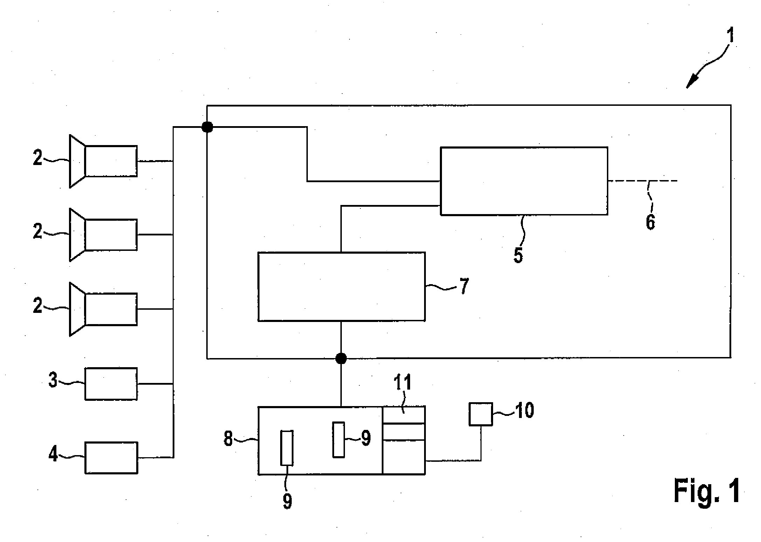

Die Figur 1 zeigt in einer schematischen Blockdarstellung ein Überwachungssystem 1 als ein Ausführungsbeispiel der Erfindung, welches mit einer Mehrzahl von Überwachungskameras 2, alternativ oder ergänzend mit anderen Sensoren 3, insbesondere Bewegungsmeldern, und/oder Speichereinrichtungen 4 signaltechnisch verbunden ist. Die Überwachungskameras 2 bzw. Sensoren 3 sind zur Überwachung von Überwachungsbereichen, wie z.B. öffentlichen Plätzen, Schulen, Bahnhöfen, Kreuzungen etc. angeordnet und/oder ausgebildet. Die Überwachungsbereiche werden durch die Überwachungskameras 2 bzw. Sensoren 3 abgebildet und dem Überwachungssystem 1 in Form von Überwachungsszenen zur Verfügung gestellt. Die Speichereinrichtungen 4 dienen zur temporären und/oder dauerhaften Speicherung der Signale der Überwachungskameras 2 bzw. Sensoren 3.

Das Überwachungssystem 1 umfasst einen Objektdetektor 5, welcher programmtechnisch und/oder schaltungstechnisch ausgebildet ist, in den Überwachungsszenen Objekte, insbesondere bewegte Objekte, zu detektieren und/oder zu verfolgen und anhand von deren Objekteigenschaften diese als Überwachungsobjekte zu klassifizieren. Die Klassifikation erfolgt durch einen Vergleich der Objekteigenschaften des Objekts mit Objekteigenschaftsbereichen, welche Klassifikationsbedingungen bilden. Sobald ein Objekt als Überwachungsobjekt klassifiziert ist, wird dieses abhängig von der weiteren Ausgestaltung des Überwachungssystems 1 verfolgt, dessen Informationen oder Daten gespeichert, ein Alarm ausgegeben, etc. Diese möglichen Reaktionen des Objektdetektors 5 sind durch die gestrichelte Linie 6 angedeutet.

Zur Definition, insbesondere Generierung der Objekteigenschaftsbereiche weist das Überwachungssystem 1 ein Konfigurationsmodul 7 auf, welches eine halbautomatische und/oder interaktive Festlegung der Objekteigenschaftsbereiche ermöglicht. Das Konfigurationsmodul 7 ist mit einer Darstelleinrichtung 8, wie z.B. einem Monitor signaltechnisch verbunden, wobei auf der Darstelleinrichtung 8 eine der Überwachungsszenen mit Objekten 9 dargestellt wird bzw. darstellbar ist. Zur leichteren Erkennbarkeit der Objekte 9 können diese grafisch kenntlich gemacht sein, wie zum Beispiel durch einen Rahmen oder durch eine farbliche Markierung. Die in der Darstelleinrichtung 8 gezeigte Überwachungsszene kann eine von den Überwachungskameras 2 in Echtzeit erfassten Überwachungsbereiche darstellen, jedoch auch eine in der Speichereinrichtung 4 abgelegte Überwachungsszene sein.

Mittels einer Mensch-Maschinen-Schnittstelle (MMS) 10 wählt ein Benutzer eines oder mehrere der Objekte 9 als Referenzobjekte interaktiv aus. Beispielsweise "klickt" der Benutzer die auszuwählenden Objekte 9 an. Auf Basis des oder der ausgewählten Objekte 9, welche im Weiteren von dem Konfigurationsmodul 7 als Referenzobjekte behandelt werden, werden von dem Konfigurationsmodul 7 die Objekteigenschaftsbereiche abgeleitet.

Bei einer möglichen Alternative werden die Objekteigenschaftsbereiche automatisch ermittelt, zum Beispiel, indem eine Mehrzahl von Referenzobjekten ausgewählt ist und die Objekteigenschaftsbereiche durch eine statistische Auswertung bestimmt werden.

Eine weitere Möglichkeit besteht darin, dass zum Beispiel bei einem ausgewählten Referenzobjekt, die Objekteigenschaften des Referenzobjekts mit vorgegebenen Toleranzen versehen werden, wobei die Objekteigenschaften zusammen mit den Toleranzen die Objekteigenschaftsbereiche bilden.

Bei einer dritten Möglichkeit ist eine Eingabeeinrichtung 11 mit dem Konfigurationsmodul 7 signaltechnisch verbunden, wobei die Eingabeeinrichtung 11 die manuelle Eingabe von Toleranzen bzw. Bereichsbreiten der Objekteigenschaftsbereiche ermöglicht. Die Objekteigenschaftsbereiche werden dann auf Basis der Objekteigenschaften des oder der Referenzobjekte zusammen mit den interaktiv eingegebenen Toleranzen bzw. Bereichsbreiten an das Konfigurationsmodul 7 übergeben.

Die Objekteigenschaften betreffen beispielsweise alle oder eine Auswahl von statistischen Kenngrößen der Objekte, wie Größe, Geschwindigkeit, Bewegungsrichtung und/oder Farbe des Objekts. Die Eingabeeinrichtung 11 zeigt je Objekteigenschaft sowohl einen mittleren Ergebniswert als auch eine Toleranz bzw. einen Toleranzwert an. Dieser Toleranzwert kann zum Beispiel mit einem virtuellen Schieberegler interaktiv bzw. manuell angepasst werden. Auf diese Weise kann der Benutzer die Gewichtung der Parameter bei der Suche in einfacher Weise steuern. Aus den Ergebnis- und Toleranzwerten werden die Parameter für die Objektvergleiche abgeleitet, mit denen die Daten in der Speichereirichtung 4 oder in den Datenströmen der Überwachungskameras 2 bzw. Sensoren 3 durchsucht werden. In analoger Weise kann das Konfigurationsmodul 7 auch zur Konfiguration von anderen Sensoren, wie z.B. intelligenten Bewegungsmeldern angewendet werden.

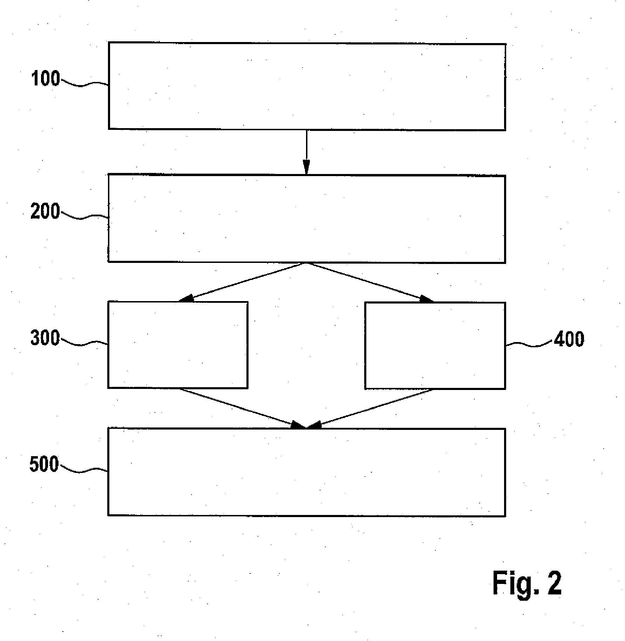

Die Figur 2 zeigt in einem schematischen Flussdiagramm einen möglichen Verfahrensablauf zu dem Überwachungssystem 1 in der Figur 1 als ein Ausführungsbeispiel des erfindungsgemäßen Verfahrens, welches insbesondere auf dem Überwachungssystem 1 durchgeführt werden kann.

In einem ersten Schritt 100 werden in der Darstelleinrichtung 8 Objekte der Überwachungsszene angezeigt und dem Benutzer zur Auswahl angeboten. In einem zweiten Schritt 200 wird mindestens eines der angezeigten Objekte als ein Referenzobjekt interaktiv und/oder manuell von dem Benutzer ausgewählt.

Je nach Betriebsart des Überwachungssystems 1 werden bei einer ersten Möglichkeit auf Basis der Objekteigenschaftswerte des oder der Referenzobjekte automatisiert, Toleranzen erstellt und aus den Objekteigenschaftswerten und den Toleranzen Objekteigenschaftsbereiche gebildet. Bei einer weiteren Betriebsart werden die Toleranzen oder Bereichsbreiten mithilfe der Eingabeeinrichtung 11 interaktiv von dem Benutzer eingestellt. Als Arbeitshilfe können die eingestellten Toleranzen grafisch in der Darstelleinrichtung 8 dargestellt werden, so kann zum Beispiel eine Toleranz der Objektgröße in einfacher Weise visualisiert werden. Nach der manuellen bzw. automatischen Einstellung der Toleranzen bzw. Bereichsbreiten in dem Schritt 300 bzw. in dem Schritt 400 werden die Objekteigenschaftsbereiche an den Objektdetektor 5 übergeben, welcher in einem Schritt 500 die Online- bzw. die Offline-Daten nach Objekten durchsucht, welche Objekteigenschaften aufweisen, die innerhalb der Objekteigenschaftsbereiche liegen. Diese Objekte werden als Überwachungsobjekte klassifiziert und weiterbehandelt.

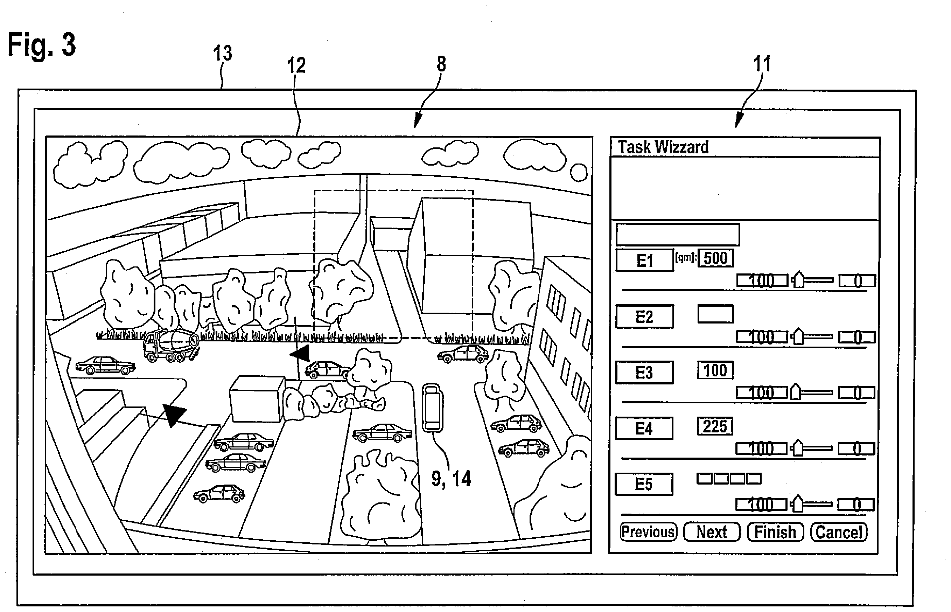

Die Figur 3 zeigt eine mögliche Ausführungsform der Darstelleinrichtung 8 und der Eingabeeinrichtung 11 in der Figur 1, welche gemeinsam auf einem Monitor 13 visualisiert sind. Auf der linken Seite ist eine Überwachungsszene 12 mit den eingezeichneten Objekten 9 dargestellt. Nach Auswahl eines Objekts 9 als ein Referenzobjekt 14 wird zur interaktiven Einstellung der Toleranzen bzw. Bereichsbreiten auf der rechten Seite des Monitors 13 ein Menüfeld als Eingabeeinrichtung 11 eingeblendet. Das Menüfeld zeigt einen Mittelwert oder den aktuellen Wert der Objekteigenschaften E1, E2, E3 und E4 des ausgewählten Referenzobjekts 14 an. Die Objekteigenschaftswerte werden beispielsweise numerisch, symbolisch oder farblich dargestellt.

Bei einer beispielhaften Ausführung sind die Objekteigenschaften wie folgt zugeordnet:
- E1:: Objektgröße oder -fläche
- E2:: Verhältnis von Höhe zu Breite des Objekts (Aspektverhältnis)
- E3:: Bewegungsgeschwindigkeit des Objekts in [km/h]
- E4:: Bewegungsrichtung des Objekts in [°]
- E5:: Farbe des Objekts

Für jede Objekteigenschaft zeigt die Eingabeeinrichtung 11 einen Schieberegler 13, mit dem interaktiv die Toleranz oder die Bereichsbreite zwischen 0 (exakt) und 100 (großzügig) für jede Objekteigenschaft einstellbar ist. Es ist auch möglich Objekteigenschaften zu deaktivieren oder andere Objekteigenschaften hinzu zu fügen. Nach einer Bestätigung der Eingabe wird der Mittelwert bzw. der aktuelle Wert der Objekteigenschaft zusammen mit den Toleranzen bzw. Bereichsbreiten zu Objekteigenschaftsbereichen umgerechnet, die dann dem Objektdetektor 5 ans Bedingung für die Klassifizierung eines Objekts 9 als Überwachungsobjekt übergeben wird.

## Patentansprüche

1. Konfigurationsmodul (7) für ein Überwachungssystem (1),
wobei das Überwachungssystem (1) ausgebildet ist, Objekte (9) mit Objekteigenschaften in Videobildern einer Überwachungsszene (12) auf Basis von Objekteigenschaftsbereichen als Überwachungsobjekte zu klassifizieren,
wobei das Konfigurationsmodul (7) zur Definition der Objekteigenschaftsbereiche ausgebildet ist,
mit einer Auswahleinrichtung (10,13) zur interaktiven Auswahl und/oder Bestätigung der Auswahl eines den späteren Überwachungsobjekten ähnlichen Objekts (9) als Referenzobjekt (14), wobei die Objekteigenschaftsbereiche ausgehend von und/oder unter Verwendung der Objekteigenschaften des Referenzobjekts (14) definiert werden,
wobei die Auswahleinrichtung eine Darstelleinrichtung (13) umfasst, auf der ein Videobild der Überwachungsszene (12) mit Objekten (9) dargestellt wird, wobei die Auswahl des Objekts auf dem Videobild mittels einer Mensch-Maschinen-Schnittstelle (10) erfolgt,
wobei das Konfigurationsmodul (7) ausgebildet ist, die Objekteigenschaftsbereiche auf Basis des ausgewählten Objektes abzuleiten,
**gekennzeichnet durch**
eine Eingabeeinrichtung (11), welche zur Eingabe einer Einstellung der Objekteigenschaftsbereiche ausgebildet ist,
wobei die Eingabeeinrichtung (11) durch eine grafische Einstellmöglichkeit zur Definition von Toleranzen der Objekteigenschaften ausgebildet ist, wobei die Objekteigenschaften mit den Toleranzen die Objekteigenschaftsbereiche definieren.

2. Konfigurationsmodul (7) nach Anspruch 1, **dadurch gekennzeichnet, dass** auswählbare Objekte (9) in der Darstelleinrichtung (13) markiert dargestellt sind.

3. Konfigurationsmodul (7) nach Anspruch 1, **dadurch gekennzeichnet, dass** die Eingabeeinrichtung (11) zur Eingabe eines einzigen Toleranzwertes pro Objekteigenschaft ausgebildet ist.

4. Konfigurationsmodul (7) nach Anspruch 3, **dadurch gekennzeichnet, dass** die Eingabeeinrichtung (11) zur visuellen Darstellung der Toleranz bzw. des Toleranzwertes ausgebildet ist.

5. Konfigurationsmodul (7) nach einem der vorhergehenden Ansprüche, **dadurch gekennzeichnet, dass** die Objekteigenschaftsbereiche und/oder die Toleranzen und/oder die Toleranzwerte in der Darstelleinrichtung (13) visualisiert wird.

6. Konfigurationsmodul (7) nach einem der vorhergehenden Ansprüche, **dadurch gekennzeichnet, dass** die Objekteigenschaften eine, einige oder alle der nachfolgenden Eigenschaften umfassen:
Position des Objekts (9),
Bewegungsgeschwindigkeit des Objekts (9),
Bewegungsrichtung des Objekts (9),
Abstand des Objekts (9) zu einem weiteren Objekt,
Fläche des Objekts (9),
Größen- oder Aspektverhältnis des Objekts (9),
Grauwert des Objekts (9),
Farbwert des Objekts (9),
Textur des Objekts (9),

7. Überwachungssystem (1) umfassend das Konfigurationsmodul (7) nach einem der vorhergehenden Ansprüche.

8. Verfahren zur Konfiguration eines Überwachungssystems (1) nach dem Anspruch 7.

9. Computerprogramm mit Programmcode-Mitteln, um alle Schritte des Verfahrens nach Anspruch 8 durchzuführen, wenn das Programm auf einem Computer oder einer Vorrichtung gemäss einem der Ansprüche 1 bis 7 ausgeführt wird.

## Claims

1. Configuration module (7) for a surveillance system (1),
wherein the surveillance system (1) is designed to classify objects (9) having object properties in video images of a surveillance scene (12) on the basis of object property ranges as objects to be monitored,
wherein the configuration module (7) is designed for defining the object property ranges, comprising a selection device (10, 13) for interactive selection and/or confirmation of the selection of an object (9) that is similar to the later objects to be monitored as reference object (14), wherein the object property ranges are defined on the basis of and/or using the object properties of the reference object (14),
wherein the selection device comprises a display device (13), on which a video image of the surveillance scene (12) with objects (9) is displayed, wherein the object is selected on the video image by means of a human-machine interface (10),
wherein the configuration module (7) is designed to derive the object property ranges on the basis of the selected object,
**characterized by**
an input device (11) designed for inputting a setting of the object property ranges,
wherein the input device (11) is designed by means of a graphical setting possibility for the definition of tolerances of the object properties, wherein the object properties with the tolerances define the object property ranges.

2. Configuration module (7) according to Claim 1, **characterized in that** selectable objects (9) are displayed in a marked manner in the display device (13) .

3. Configuration module (7) according to Claim 1, **characterized in that** the input device (11) is designed for inputting a single tolerance value per object property.

4. Configuration module (7) according to Claim 3, **characterized in that** the input device (11) is designed for visually displaying the tolerance and/or the tolerance value.

5. Configuration module (7) according to one of the preceding claims, **characterized in that** the object property ranges and/or the tolerances and/or the tolerance values are visualized in the display device (13).

6. Configuration module (7) according to any of the preceding claims, **characterized in that** the object properties comprise one, a few or all of the following properties:
Position of the object (9),
Speed of movement of the object (9),
Direction of movement of the object (9),
Distance between the object (9) and a further object,
Area of the object (9),
Size or aspect ratio of the object (9),
Grey-scale value of the object (9),
Colour value of the object (9),
Texture of the object (9).

7. Surveillance system (1) comprising the configuration module (7) according to one of the preceding claims.

8. Method for configuring a surveillance system (1) according to Claim 7.

9. Computer program comprising program code means for carrying out all the steps of the method according to Claim 8 when the program is executed on a computer or a device according to one of Claims 1 to 7.

## Revendications

1. Module de configuration (7) pour un système de surveillance (1),
le système de surveillance (1) étant configuré pour classifier en tant qu'objets surveillés des objets (9) ayant des propriétés d'objet dans des images vidéo d'une scène surveillée (12) sur la base de plages de propriétés d'objet,
le module de configuration (7) étant configuré pour la définition des plages de propriétés d'objet,
comprenant un dispositif de sélection (10, 13) destiné à la sélection interactive et/ou à la confirmation de la sélection d'un objet (9) similaire aux futurs objets surveillés en tant qu'objet de référence (14), les plages de propriétés d'objet étant définies à partir des et/ou en utilisant les propriétés d'objet de l'objet de référence (14),
le dispositif de sélection comportant un dispositif de représentation (13) sur lequel est représentée une image vidéo de la scène surveillée (12) comprenant des objets (9), la sélection de l'objet sur l'image vidéo s'effectuant au moyen d'une interface homme-machine (10), le module de configuration (7) étant configuré pour dériver les plages de propriétés d'objet en se basant sur l'objet sélectionné,
**caractérisé par**
un dispositif de saisie (11) qui est configuré pour la saisie d'un réglage des plages de propriétés d'objet,
le dispositif de saisie (11) étant formé par une possibilité de réglage graphique destinée à définir des tolérances des propriétés d'objet, les propriétés d'objet avec les tolérances définissant les plages de propriétés d'objet.

2. Module de configuration (7) selon la revendication 1, **caractérisé en ce que** les objets (9) pouvant être sélectionnés sont représentés marqués dans le dispositif de représentation (13).

3. Module de configuration (7) selon la revendication 1, **caractérisé en ce que** le dispositif de saisie (11) est configuré pour la saisie d'une valeur de tolérance unique par propriété d'objet.

4. Module de configuration (7) selon la revendication 3, **caractérisé en ce que** le dispositif de saisie (11) est configuré pour la représentation visuelle de la tolérance ou de la valeur de tolérance.

5. Module de configuration (7) selon l'une des revendications précédentes, **caractérisé en ce que** les plages de propriétés d'objet et/ou les tolérances et/ou les valeurs de tolérance sont visualisées dans le dispositif de représentation (13).

6. Module de configuration (7) selon l'une des revendications précédentes, **caractérisé en ce que** les propriétés d'objet comprennent une, certaines ou la totalité des propriétés suivantes :
position de l'objet (9),
vitesse de déplacement de l'objet (9),
direction de déplacement de l'objet (9),
distance entre l'objet (9) et un autre objet,
aire de l'objet (9),
rapport de taille ou d'aspect de l'objet (9),
niveau de gris de l'objet (9),
valeur de couleur de l'objet (9),
texture de l'objet (9).

7. Système de surveillance (1) comprenant le module de configuration (7) selon l'une des revendications précédentes.

8. Procédé de configuration d'un système de surveillance (1) selon la revendication 7.

9. Programme informatique comprenant des moyens de code de programme afin d'exécuter toutes les étapes du procédé selon la revendication 8 lorsque le programme est exécuté sur un ordinateur ou sur un arrangement selon l'une des revendications 1 à 7.
